# EUROPEAN PATENT SPECIFICATION

(11) **EP 4 411 640 B1**
(45) Date of publication and mention of the grant of the patent: **20.05.2026**
(21) Application number: 23207731.3
(22) Date of filing: 03.11.2023
(51) Int. Cl.: G06T 7/70

(54) **ROBOTIC WIRE CONTACT MANIPULATION AND POSE ESTIMATION SYSTEM**
ROBOTERDRAHTKONTAKTMANIPULATIONS- UND HALTUNGSSCHÄTZSYSTEM
SYSTÈME ROBOTIQUE D'ESTIMATION DE POSE ET DE MANIPULATION DE CONTACT DE FIL

(30) Priority: 03.02.2023 US 202318164229
(43) Date of publication of application: 07.08.2024
(73) Proprietor: The Boeing Company, Arlington, VA 22202 (US)
(72) Inventor: Chan, Darren Michael, Arlington, 22202 (US); McAllister, Wyatt Spalding, Arlington, 22202 (US); Hoffmann, Heiko, Arlington, 22202 (US)
(74) Representative: Witte, Weller & Partner Patentanwälte mbB

(56) References cited:
- EP-A1- 3 772 785
- US-A1- 2022 234 208
- IKONEN L ET AL: "ROBOT VISION SYSTEM FOR HANDLING SHEETS IN A MANUFACTURING CELL", PATTERN RECOGNITION. IMAGE ANALYSIS, ALLEN PRESS, LAWRENCE, KS, US, vol. 11, no. 3, 1 July 2001 (2001-07-01), pages 498 - 504, XP008031973, ISSN: 1054-6618
- ROBIN N STRICKLAND ET AL: "Estimation of ship profiles from a time sequence of forward-looking infrared images", OPTICAL ENGINEERING,, vol. 25, no. 8, 1 August 1986 (1986-08-01), pages 995 - 1000, XP001375766

## Description

### BACKGROUND INFORMATION

### 1. Field:

The present disclosure relates generally to manufacturing assemblies and in particular, to determining the pose of a wire contact for use in moving wires in a wire bundling assembly process.

### 2. Background:

In manufacturing commercial aircraft, wires are often installed in bundles to form wire harnesses. This process involves wires being fed and cut by the machine into desired lengths. Wire contacts are attached to the wires. These wires are placed into a location for assembly using robots. These wires can then be manipulated by a robot with an end effector to form a wire bundle. This robotic end effector can be or can have a wire contact insertion tool.

The end effector picks up wires, moves the wires, and inserts the wire contacts for the wires into electrical connectors. In automating the assembly of wire bundles, accuracy in inserting ends of wires into connectors with high levels of precision is needed. One manner in which automation in assembling wire bundles involves using machine learning models such as neural networks that are trained to move the wires and insert the contacts into connectors. The use of machine learning models can be specific to various types of connectors and settings for wire insulation.

Therefore, it would be desirable to have a method and apparatus that take into account at least some of the issues discussed above, as well as other possible issues. For example, it would be desirable to have a method and apparatus that overcomes a problem with obtaining a desired level of accuracy in inserting wire contacts into connectors.

US 2022/234208 A1, in accordance with its abstract, states: Systems and methods for automated wire pickup using imagebased robot guidance. The machine vision-based System includes: a robot arm; a tool head coupled to the distal end of the robot arm and including a wire gripper motor; a wire gripper movably coupled to the tool head and operatively coupled to the wire gripper motor; a wire holder configured for clamping a wire; camera means mounted to the distal end of the robot arm and having first and second fields of view which intersect in a volume of space that includes the tip of the wire gripper and the wire holder; and a Computer System configured to control Operation of the robot arm motors and wire gripper motor. More specifically, the Computer System is configured for visually estimating the position and orientation of a contactequipped wire being held by the wire holder and then generating robot guidance to enable automated pickup of the end section of the wire by the wire gripper.

EP 3 772 785 A1, in accordance with its abstract, states: A method, system and Computer program product are provided for aligning and inserting a wire contact within a target hole of a connector to facilitate the automated insertion of the wire ends of a wire bundle assembly into the wire contact insertion holes of a connector. Methods may include: obtaining captured images, from at least two image capture devices attached to an end-effector of a robot, of a wire gripper of the end-effector; causing the robot to advance the end-effector to move the wire contact within a predetermined distance of the connector; causing the robot to advance the end-effector to move the wire contact toward the connector a predetermined additional amount more; and identifying, based on movement of the wire contact the predetermined additional amount more, if alignment is correct from force feedback at the wire gripper.

The paper IKONEN L ET AL: "ROBOT VISION SYSTEM FOR HANDLING SHEETS IN A MANUFACTURING CELL", PATTERN RECOGNITION. IMAGE ANALYSIS, ALLEN PRESS, LAWRENCE, KS, US, vol. 11, no. 3, 1 July 2001 (2001 -07-01), pages 498-504, presents an industrial application for robotized handling of sheet metal parts in a workshop.

The paper ROBIN N STRICKLAND ET AL: "Estimation of ship profiles from a time sequence of forward-looking infrared Images", OPTICAL ENGINEERING, vol. 25, no. 8, 1 August 1986 (1986-08-01), pages 995-1000, addresses the problem of estimating the profile or silhouette of a ship target from a sequence of forward-looking infrared imagery obtained at video rates.

### SUMMARY

According to the present disclosure, a robotic system and a method for positioning a wire contact as defined in the independent claims are provided. Further embodiments are defined in the dependent claims. Although the invention is only defined by the claims, the below embodiments, examples, and aspects are present for aiding in understanding the background and advantages of the disclosure.

An embodiment of the present disclosure provides a robotic system as defined in claim 1. The robotic system comprises an end effector, a camera system connected to the end effector, and a controller. The controller is configured to generate a sequence of images of a wire contact while the wire contact moves from a first position to a second position. The sequence of images is generated by the camera system connected to the end effector and the wire contact is held by the end effector. The controller is configured to detect edges in the sequence of images to form edge images. The controller is configured to remove background edges from the edges in the edge images leaving contact edges in the edges for the wire contact to form a contact edge image. The controller is configured to identify the wire contact using the contact edges in the contact edge image. The controller is configured to use a backup to determine a pose of the wire contact from the wire contact identified in the contact edge image.

Another embodiment of the present disclosure provides a method for positioning a wire contact as defined in claim 9. A sequence of images of a wire contact is generated while the wire contact moves from a first position to a second position. The sequence of images is generated by the camera system connected to the end effector and the wire contact is held by the end effector. Edges are detected in the sequence of images to form edge images. Background edges are removed from the edges in the edge images leaving contact edges in the edges for the wire contact to form a contact edge image. The wire contact is identified using the contact edges in the contact edge image. A pose of the wire contact is determined from the wire contact identified in the contact edge image.

The features and functions can be achieved independently in various embodiments of the present disclosure or may be combined in yet other embodiments in which further details can be seen with reference to the following description and drawings.

### BRIEF DESCRIPTION OF THE DRAWINGS

The novel features believed characteristic of the illustrative embodiments are set forth in the appended claims. The illustrative embodiments, however, as well as a preferred mode of use, further objectives and features thereof, will best be understood by reference to the following detailed description of an illustrative embodiment of the present disclosure when read in conjunction with the accompanying drawings, wherein:
**Figure 1** is a pictorial representation of a network of data processing systems in which illustrative embodiments may be implemented;
**Figure 2** is a block diagram of a manufacturing environment in accordance with an illustrative embodiment;
**Figure 3** is an illustration of dataflow for determining the pose of a wire contact in accordance with an illustrative embodiment;
**Figure 4** is an illustration of an end effector for a robotic arm in accordance with an illustrative embodiment;
**Figure 5** is an illustration of a flowchart of a process for positioning a wire contact in accordance with an illustrative embodiment;
**Figure 6** is an illustration of a flowchart of a process for positioning a wire contact in accordance with an illustrative embodiment;
**Figure 7** is an illustration of a flowchart of a process for positioning a wire contact in accordance with an illustrative embodiment;
**Figure 8** is an illustration of a flowchart of a process for detecting edges in accordance with an illustrative embodiment;
**Figure 9** is an illustration of a flowchart of process for removing background edges in accordance with an illustrative embodiment;
**Figure 10** is an illustration of a flowchart of a process for removing edges in accordance with an illustrative embodiment;
**Figure 11** is an illustration of a flowchart of a process for identifying a wire contact in a contact edge image in accordance with an illustrative embodiment;
**Figure 12** is an illustration of a flowchart of a process for processing images to determine the pose of a wire contact using a stenographic camera in accordance with an illustrative embodiment;
**Figure 13** is an illustration of a flowchart of a process for positioning an object in accordance with an illustrative embodiment;
**Figure 14** is an illustration of a flowchart of a process for processing a sequence of images in accordance with an illustrative embodiment;
**Figure 15** is an illustration of a block diagram of a data processing system in accordance with an illustrative embodiment;
**Figure 16** is an illustration of an aircraft manufacturing and service method in accordance with an illustrative embodiment; and
**Figure 17** is an illustration of a block diagram of an aircraft in which an illustrative embodiment may be implemented.

### DETAILED DESCRIPTION

The illustrative embodiments recognize and take into account one or more different considerations. Accuracy in determining the pose of a wire contact is important to perform various operations such as robotic wire insertion. An end effector should be able to insert both ends of a wire in an arbitrary order with a desired level of precision.

Thus, illustrative embodiments provide a method, apparatus, system, and computer program product for determining the pose of a wire contact. The different illustrative examples described herein can perform this pose determination for a wire contact, regardless of its shape, color, and reflectivity of the wire contact. Images of the wire contact are generated during the course of manipulation, which does not require prior modeling. In other words, a machine learning model such as an artificial neural network does not need to be trained to determine the pose of a wire contact in the illustrative examples. Further, the illustrative example can determine the pose of a wire contact during movement of a specular wire contact even though the color and appearance are prone to change during the course of manipulation.

In one illustrative example, a sequence of images of a wire contact are generated while the wire contact moves from a first position to a second position. The sequence of images is generated by the camera system connected to the end effector and the wire contact is held by the end effector. Edges are detected in the sequence of images to form edge images. Background edges are removed from the edges in the edge images leaving contact edges in the edges for the wire contact to form a contact edge image. The wire contact is identified using the contact edges in the contact edge image. A pose of the wire contact is determined from the wire contact identified in the contact edge image.

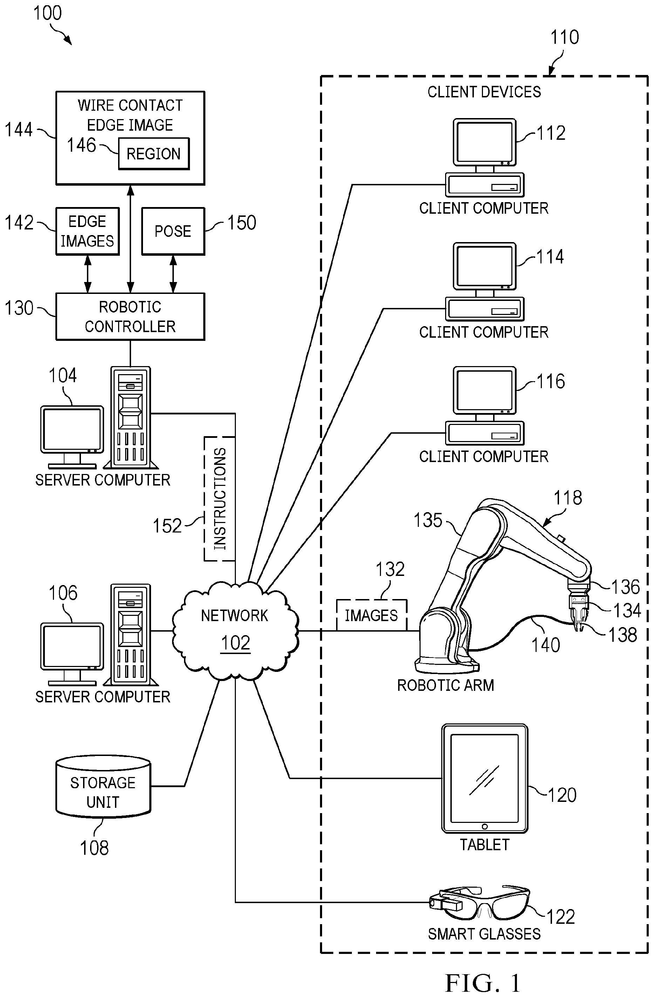

With reference now to the figures and, in particular, with reference to **Figure 1****,** a pictorial representation of a network of data processing systems is depicted in which illustrative embodiments may be implemented. Network data processing system **100** is a network of computers in which the illustrative embodiments may be implemented. Network data processing system **100** contains network **102,** which is the medium used to provide communications links between various devices and computers connected together within network data processing system **100.** Network **102** may include connections, such as wire, wireless communication links, or fiber optic cables.

In the depicted example, server computer **104** and server computer **106** connect to network **102** along with storage unit **108.** In addition, client devices **110** connect to network **102.** As depicted, client devices **110** include client computer **112,** client computer **114,** and client computer **116.** Client devices **110** can be, for example, computers, workstations, or network computers. In the depicted example, server computer **104** provides information, such as boot files, operating system images, and applications to client devices **110.** Further, client devices **110** can also include other types of client devices such as robotic arm **118,** tablet computer **120,** and smart glasses **122.** In this illustrative example, server computer **104,** server computer **106,** storage unit **108,** and client devices **110** are network devices that connect to network **102** in which network **102** is the communications media for these network devices. Some or all of client devices **110** may form an Internet of things (IoT) in which these physical devices can connect to network **102** and exchange information with each other over network **102.**

Client devices **110** are clients to server computer **104** in this example. Network data processing system **100** may include additional server computers, client computers, and other devices not shown. Client devices **110** connect to network **102** utilizing at least one of wired, optical fiber, or wireless connections.

Program instructions located in network data processing system **100** can be stored on a computer-recordable storage medium and downloaded to a data processing system or other device for use. For example, program instructions can be stored on a computer-recordable storage medium on server computer **104** and downloaded to client devices **110** over network **102** for use on client devices **110.**

In the depicted example, network data processing system 100 is the Internet with network **102** representing a worldwide collection of networks and gateways that use the Transmission Control Protocol/Internet Protocol (TCP/IP) suite of protocols to communicate with one another. At the heart of the Internet is a backbone of high-speed data communication lines between major nodes or host computers consisting of thousands of commercial, governmental, educational, and other computer systems that route data and messages. Of course, network data processing system **100** also may be implemented using a number of different types of networks. For example, network **102** can be comprised of at least one of the Internet, an intranet, a local area network (LAN), a metropolitan area network (MAN), or a wide area network (WAN). **Figure 1** is intended as an example, and not as an architectural limitation for the different illustrative embodiments.

As used herein, "a number of" when used with reference to items, means one or more items. For example, "a number of different types of networks" is one or more different types of networks.

Further, the phrase "at least one of," when used with a list of items, means different combinations of one or more of the listed items can be used, and only one of each item in the list may be needed. In other words, "at least one of" means any combination of items and number of items may be used from the list, but not all of the items in the list are required. The item can be a particular object, a thing, or a category.

For example, without limitation, "at least one of item A, item B, or item C" may include item A, item A and item B, or item B. This example also may include item A, item B, and item C or item B and item C. Of course, any combinations of these items can be present. In some illustrative examples, "at least one of" can be, for example, without limitation, two of item A; one of item B; and ten of item C; four of item B and seven of item C; or other suitable combinations.

In this illustrative example, robotic controller **130** is located in server computer **104.** Robotic controller **130** can control the operation of robotic arm **118.** In this example, robotic controller **130** controls the operation of robotic arm **118** to perform manufacturing operations. For example, robotic arm **118** can be used to assemble wire bundles. As depicted, robotic arm **118** can insert wire contacts for wires into connectors as part of the process for assembling wire bundles.

As depicted, robotic controller **130** can control robotic arm **118** to send images **132** to robotic controller **130** over network **102.** Robotic arm **118** has arm **135** connected to end effector **136.** In this example, stereoscopic camera **134** connected to end effector **136** of robotic arm **118.** As depicted, end effector **136** holds wire **140** having wire contact **138.**

Robotic controller **130** controls a stereoscopic camera **134** to generate and send images **132.** Images **132** include wire contact **138** in this illustrative example. These images can be generated as robotic arm **118** moves end effector **136** with wire **140** and stereoscopic camera **134** to different positions. For example, images **132** can include one or more images from a first position of end effector **136** holding wire **140.** Images **132** is a sequence of images generated by stereoscopic camera **134** during the movement of end effector **136** holding wire **140** from the first position to the second position.

In this illustrative example, robotic controller **130** can analyze images **132** to determine the pose of wire contact **138** at the end of wire **140** held by end effector **136.** In this example, the pose of wire contact **138** is the position and orientation of wire contact **138.** The position of wire contact **138** can be described in three-dimensional coordinates. The orientation can include a direction of wire contact **138.**

Robotic controller **130** can analyze images **132** to identify wire contact **138** in images **132.** In this illustrative example, wire contact **138** is in a fixed position and orientation relative to stereoscopic camera **134.** In other words, wire contact **138** does not move relative to stereoscopic camera **134** connected to end effector **136.** As result, as end effector **136** moves, wire contact **138** remains in a fixed position in images **132.** The background in images **132** moves.

With the fixed position of wire contact **138** and the movement of the background in images **132,** robotic controller **130** can process images **132** to identify edges in images **132** to form edge images **142.** These edge images are processed to identify edges for wire contact **138** in wire contact edge image **144.** With this processing, edges corresponding to the background are removed from edge images **142** to form wire contact edge image **144** as part of the process for determining the median over edge images **142.** In this example, wire contact edge image **144** is a median of edge images **142.**

In this example, robotic controller **130** can determine the pose of wire contact **138** without using complex techniques that involve machine learning models. As depicted, robotic controller **130** determines region **146** in wire contact edge image **144** that contains wire contact **138.** This determination of region **146** can be performed using a number of different processes such as an image segmentation algorithm. This type of process can identify the foreground of a target object such as wire contact **138** in wire contact edge image **144.** With the identification of region **146** for wire contact **138** in wire contact edge image **144,** robotic controller **130** can determine pose **150** of wire contact **138.**

With the identification of pose **150,** robotic controller **130** can control the movement of arm **135** to move end effector **136** with wire contact **138.** This movement can insert wire contact **138** into a hole in the connector. In this example, this movement can be controlled by robotic controller **130** sending instructions **152** from server computer **104** to robotic arm **118** over network **102.** These instructions can include commands and data used to operate robotic arm **118.** Robotic arm **118** can have a processor or controller that receives instructions **152** and processes instructions **152.**

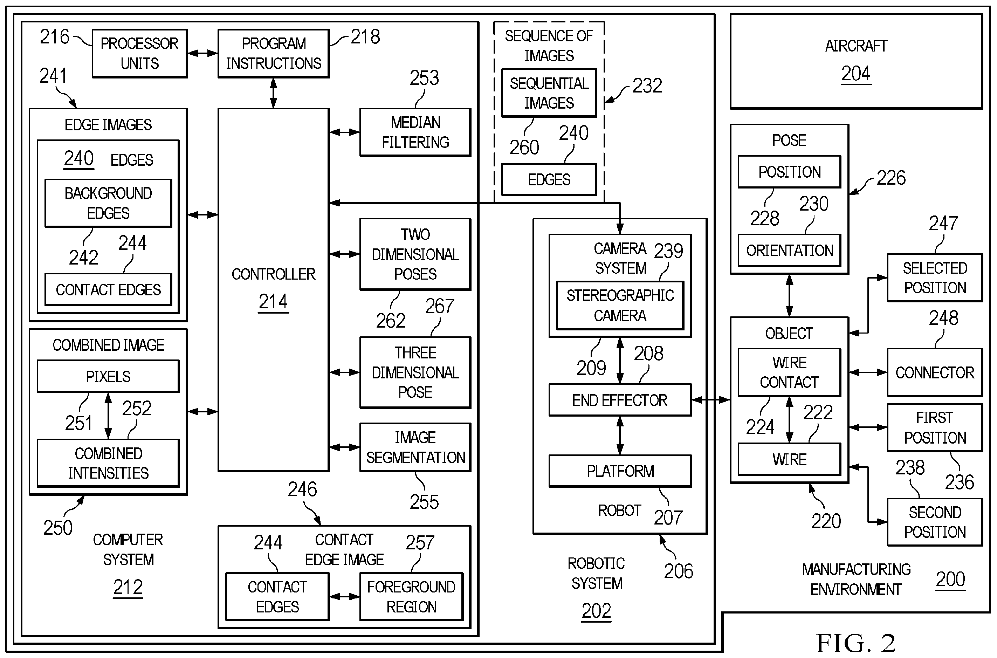

With reference now to **Figure 2****,** a block diagram of a manufacturing environment is depicted in accordance with an illustrative embodiment. In this illustrative example, manufacturing environment **200** includes components that can be implemented in hardware such as the hardware shown in network data processing system **100** in **Figure 1****.**

As depicted, robotic system **202** in manufacturing environment **200** can perform operations to manufacture aircraft **204.** In this example, aircraft **204** can take a number of different forms. For example, aircraft **204** can be a commercial aircraft, an airplane, a rotorcraft, a tilt-rotor aircraft, a tilt wing aircraft, a vertical takeoff and landing aircraft, an electrical vertical takeoff and landing vehicle, a personal air vehicle, and other suitable types of aircraft.

In this illustrative example, robotic system **202** comprises a number of different components. As depicted, robotic system **202** comprises computer system **212,** controller **214,** robot **206.** As depicted, controller **214** is located in computer system **212.**

Controller **214** can be implemented in software, hardware, firmware or a combination thereof. When software is used, the operations performed by controller **214** can be implemented in program instructions configured to run on hardware, such as a processor unit. When firmware is used, the operations performed by controller **214** can be implemented in program instructions and data and stored in persistent memory to run on a processor unit. When hardware is employed, the hardware may include circuits that operate to perform the operations in controller **214.**

In the illustrative examples, the hardware may take a form selected from at least one of a circuit system, an integrated circuit, an application specific integrated circuit (ASIC), a programmable logic device, or some other suitable type of hardware configured to perform a number of operations. With a programmable logic device, the device can be configured to perform the number of operations. The device can be reconfigured at a later time or can be permanently configured to perform the number of operations. Programmable logic devices include, for example, a programmable logic array, a programmable array logic, a field programmable logic array, a field programmable gate array, and other suitable hardware devices. Additionally, the processes can be implemented in organic components integrated with inorganic components and can be comprised entirely of organic components excluding a human being. For example, the processes can be implemented as circuits in organic semiconductors.

Computer system **212** is a physical hardware system and includes one or more data processing systems. When more than one data processing system is present in computer system **212,** those data processing systems are in communication with each other using a communications medium. The communications medium may be a network. The data processing systems may be selected from at least one of a computer, a server computer, a tablet, or some other suitable data processing system.

As depicted, computer system **212** includes a number of processor units **216** that are capable of executing program instructions **218** implementing processes in the illustrative examples. In other words, program instructions **218** are computer readable program instructions.

As used herein, a processor unit in the number of processor units **216** is a hardware device and is comprised of hardware circuits such as those on an integrated circuit that respond to and process instructions and program code that operate a computer. When the number of processor units **216** executes program instructions **218** for a process, the number of processor units **216** can be one or more processor units that are on the same computer or on different computers. In other words, the process can be distributed between processor units **216** on the same or different computers in a computer system **212.** Further, the number of processor units **216** can be of the same type or different type of processor units. For example, a number of processor units **216** can be selected from at least one of a single core processor, a dual-core processor, a multi-processor core, a general-purpose central processing unit (CPU), a graphics processing unit (GPU), a digital signal processor (DSP), or some other type of processor unit.

In this illustrative example, robot **206** comprises platform **207,** end effector **208,** and camera system **209.** In this depicted example, end effector **208** is connected to platform **207** and camera system **209** is connected to an end effector **208.** Camera system **209** can include one or more cameras.

When one component is "connected" to another component, the connection is a physical connection. For example, a first component, camera system **209,** can be considered to be physically connected to a second component, end effector **208,** by at least one of being secured to the second component, bonded to the second component, mounted to the second component, welded to the second component, fastened to the second component, or connected to the second component in some other suitable manner. The first component also can be connected to the second component using a third component. The first component can also be considered to be physically connected to the second component by being formed as part of the second component, an extension of the second component, or both.

Platform **207** can take a number of different forms. For example, platform **207** can be selected from a group comprising a robotic arm, a crawler, an unmanned aerial vehicle, and other suitable types of platforms that can be connected to an end effector 208. In yet other illustrative examples, platform **207** can be connected to another component or platform. For example, end effector **208** can be connected to a robotic arm that is connected to a crawler or mobile base.

In this illustrative example, object **220** can be held by end effector **208.** In this example, robot **206** can move object **220** to perform an operation to manufacture aircraft **204.** Controller **214** determines pose **226** for object **220** for use in moving object **220** to different positions. In the illustrative example, pose **226** is position **228** of object **220** and orientation **230** of object **220.** Position **228** can be described using two-dimensional or three-dimensional coordinates. Orientation **230** can be with respect to a particular feature or features in object **220.** Orientation **230** can indicate the direction that a feature in object **220** points to in this illustrative example.

In this illustrative example, object **220** comprises wire **222** connected to wire contact **224.** In this example, pose **226** is for wire contact **224** connected to wire **222.** Pose **226** can be for all or a portion of object **220.**

In this example, controller **214** controls camera system **209** to generate sequence of images **232** of wire contact **224** while wire contact **224** moves from first position **236** to second position **238.** In this illustrative example, sequence of images **232** may not always include the image of wire contact **224** at second position **238.**

The sequence of images **232** is sent to controller **214** from camera system **209.** In this illustrative example, camera system **209** is stereographic camera **239.**

In this example, sequence of images **232** is generated by camera system **209** connected to end effector **208** and wire contact **224** is held by end effector **208.** With this configuration, wire **222** does not move with respect to camera system **209.** As a result, wire contact **224** does not move in sequence of images **232** while objects in the background can move from image to image in sequence of images **232** generated by camera system **209.**

Wire contact **224** can be held directly or indirectly by end effector **208.** For example, end effector **208** can directly hold wire contact **224** or indirectly hold wire contact **224** through holding wire **222.** When end effector **208** holds wire **222,** the location on wire **222** held by end effector **208** is such that wire contact **224** does not move or change pose with respect to camera system **209** when end effector **208** moves from first position **236** to second position **238.** In other words, movement of wire contact **224** resulting from vibrations or bending of wire **222** does not occur or is reduced sufficiently to identify wire contact **224** using sequence of images **232.**

In this illustrative example, controller **214** detects edges **240** in the sequence of images **232** to form edge images **241.** In this example, edge images **241** is comprised of edges **240** detected from sequence of images **232.**

In detecting edges **240** in sequence of images **232,** controller **214** can identify or extract edges **240** in sequence of images **232** using an edge detection process. This edge detection process can be, for example, a Sobel operator, a Canny edge detector, a Prewitt operator, or other edge detection algorithms.

Controller **214** then creates edge images **241** using edges **240** extracted from sequence of images **232.** As depicted, edges **240** includes background edges **242** and contact edges **244.** Contact edges **244** are edges **240** for wire contact **224** in sequence of images **232.**

In this depicted example, contact edges **244** are considered to be in the foreground. These edges should be the same in different images in sequence of images **232** because wire contact **224** is in a fixed position relative to camera system **209.** Background edges **242** are edges **240** for other objects or items in the background of sequence of images **232.**

In this illustrative example, controller **214** removes background edges **242** from edges in edge images **241** leaving contact edges **244** in the edges for the wire contact to form a contact edge image **246.** Controller **214** can remove background edges **242** in a number of different ways. For example, controller **214** can merge edge images **241** to form combined image **250.** Intensities of corresponding pixels in edge images **241** are added to form combined image **250** having pixels **251** with combined intensities **252.** Controller **214** can remove edges **240** in combined image **250** that have pixels **251** with combined intensities **252** that are less than a threshold for noise. These edges with combined intensities **252** are less than the threshold are background edges **242.** This removal of background edges **242** from edge images **241** in combined image **250** can be performed by controller **214** using median filtering **253** on pixels **251** in combined image **250.**

In this depicted example, controller **214** identifies wire contact **224** in contact edge image **246** using contact edges **244** in contact edge image **246.** Controller **214** can identify wire contact **224** in contact edge image **246** and a number of different ways. For example, controller **214** can perform image segmentation **255** to identify foreground region **257** in contact edge image **246** for contact edges **244.** In the illustrative example, image segmentation **255** can be performed using different image segmentation algorithms. For example, image segmentation **255** can be performed using the GrabCut algorithm. The Grabcut algorithm is an image segmentation based on graph cuts. This algorithm can use iterative graph cuts to identify wire contact **224** in contact edge image **246.**

Controller **214** determines pose **226** of wire contact **224** from wire contact **224** identified in contact edge image **246.**

When camera system **209** is stereographic camera **239,** sequence of images **232** comprises two sets of sequential images **260.** Each set is generated by camera in stereographic camera **239.** Controller **214** can perform detecting edges **240;** removing the background edges; identifying the wire contact using the contact edges in the contact edge image; and determining a pose of the wire contact from the wire contact identified in the contact edge image for the two sets of sequential images to obtain a pair of two dimensional poses **262.** Controller **214** can determine three dimensional pose **267** of wire contact **224** using the pair of two dimensional poses **262.** This three dimensional pose can be pose **226** for wire contact **224** and used to move wire contact **224.**

Controller **214** can control robot **206** to move wire contact **224** held by end effector **208** to selected position **247** using pose **226** of wire contact **224.** For example, controller **214** can move wire contact **224** held by end effector **208** into connector **248** using pose **226** of wire contact **224.**

Thus, one or more illustrative examples enable automating wire bundle assembly using robotic system **202.** In one or more illustrative examples, robotic system **202** can insert a wire contact for a wire with a desired level of accuracy. Robotic system **202** can determine the pose of a wire contact with the desired level of accuracy that enables robotic system **202** to insert both ends of a wire into connector in an arbitrary order with a higher level of precision as compared to current techniques. Further, the configuration of camera system **209** solves a problem of current techniques using cameras carefully placed around the wire contact and connector. In this example, camera system **209** is connected to robot **206** increasing the flexibility of where robotic system **202** can be used to insert wires into connectors because elaborate setups as used with current techniques are unnecessary.

Additionally, the configuration of robotic system **202** allows for inserting wires in an arbitrary order. This insertion of wires into connector **248** can also be performed with wires already inserted into connector **248.** These inserted wires can occlude a target insertion hole in connector **248** for currently used wire insertion systems. With robotic system **202,** the occlusion of an insertion hole in connector **248** can be avoided or reduced because camera system **209** is connected to end effector **208** and moves with end effector **208.** The images are generated by the camera system **209** are from the point of view of end effector **208** and wire contact **224** remains stationary in the same location within those images enabling generation of images that can reduce the possibility that a hole in a connector is occluded or obscured.

In one illustrative example, one or more technical solutions are present that overcome a technical problem with determining the pose of an object such as a wire contact with a desired level of accuracy to insert the contact into a connector. In the illustrative example, robotic system **202** operates as a robotic wire contact manipulation and pose estimation system.

Computer system **212** can be configured to perform at least one of the steps, operations, or actions described in the different illustrative examples using software, hardware, firmware or a combination thereof. As a result, computer system **212** operates as a special purpose computer system in which controller **214** in computer system **212** determines the pose of an object and use that information to control a robotic system to move the object to a desired location. In particular, controller **214** transforms computer system **212** into a special purpose computer system as compared to currently available general computer systems that do not have controller **214.**

The illustration of manufacturing environment **200** in **Figure 2** is not meant to imply physical or architectural limitations to the manner in which an illustrative embodiment may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative embodiment.

For example, although this example is described with respect to a platform in the form of aircraft **204,** other illustrative examples can be applied to other types of platforms. The platform can be, for example, a mobile platform, a stationary platform, a land-based structure, an aquatic-based structure, and a space-based structure. More specifically, the platform can be a surface ship, a tank, a personnel carrier, a train, a spacecraft, a space station, a satellite, a submarine, an automobile, a power plant, a bridge, a dam, a house, a manufacturing facility, a building, and other suitable platforms.

In yet other illustrative examples, a robotic system **202** can include additional robots in addition to robot **206.** These additional robots can also be controlled by controller **214** or additional controllers in addition to or in place of controller **214.**

The illustration of manufacturing environment **200** in **Figure 2** is not meant to imply physical or architectural limitations to the manner in which an illustrative embodiment may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative embodiment.

For example, although object **220** has been described with respect to a wire with a wire contact, other illustrative examples can be used to determine the pose of other types of objects. For example, an object can be selected from a group comprising a fastener, a rivet, a screw, a nut, a bolt, a hex standoff, a retaining ring, an integrated a chip containing an integrated circuit, a part, an assembly, and other suitable objects that can be held by an end effector and moved to various locations to manufacture aircraft **204.**

In yet another illustrative example, the different operations performed using robot **206** can be used in other operations of the manufacturing of aircraft or other platforms. For example, controller **214** can control robot **206** to perform maintenance operations.

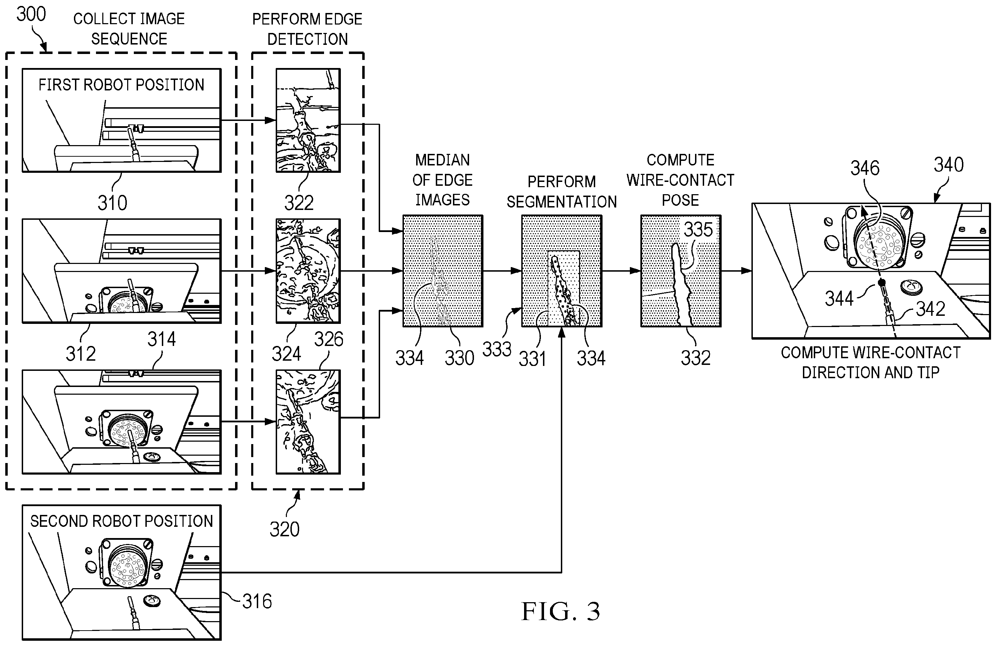

Turning now to **Figure 3****,** an illustration of dataflow for determining the pose of a wire contact is depicted in accordance with an illustrative embodiment. This dataflow can be performed using robotic system **202** and **Figure 2****.** For example, the dataflow can be processed by controller **214 in** **Figure 2****.**

In this illustrative example, sequence of images **300** are generated from a first robot position to a second robot position. Sequence of images **300** is an example of sequence of images **232** generated by camera system **209 in** **Figure 2****.** In this illustrative example, the robot positions are positions of an effector for the robot. The first robot position can be, for example, first position **236** in **Figure 2** and the second robot position can be second position **238** in **Figure 2****.**

As depicted, sequence of images **300** comprises first image **310,** second image **312,** and third image **314.** In this example, fourth image **316** is generated at the second robot position. Fourth image **316** represents the terminal position of the end effector and is not included in sequence of images **300** in this example. In other illustrative examples, fourth image **316** can be part of sequence of images **300.**

As depicted, first image **310** in sequence of images **300** is generated at first robot position. Second image **312** and third image **314** in sequence of images **300** are generated as the robot moves the wire connector from the first robot position to the second robot position.

In this illustrative example, edges can be extracted from each of the images in sequence of images **300.** In other words, edges can be detected for each individual image. In this illustrative example, edge detection can be performed using an edge detection algorithm such as a Canny edge detector, a Deriche edge detector, and other suitable algorithms for processes that can detect edges of objects in images.

In this illustrative example, edge images **320** are the result of performing edge detection on sequence of images **300.** Edge images **320** are an example of edge images **241** in **Figure 2****.**

As depicted, edge images **320** comprise first edge image **322,** second edge image **324,** and third edge image **326.** First edge image **322** is generated from performing edge detection on first image **310** and second edge image **324** is generated from performing edge detection on second image **312.** Third edge image **326** is generated from performing edge detection on third image **314.**

Next, edges corresponding to the background in edge images **320** are removed. These edges are removed across first edge image **322,** second edge image **324,** and third edge image **326.** In this example, the edges in the foreground are edges for the wire contact. These edges are in consistent locations in edge images **320** because the wire contact is held in a fixed position relative to the camera. In this depicted example, both the wire contact and the camera are connected to the end effector. For example, the wire contact is held by the end effector and the camera is attached to or part of the end effector. As result, edges for the wire contact have the same pixel locations in edge images **320.**

In this illustrative example, the background edges can be removed by determining the median of edges across edge images **320.** This process can remove edges that do not consistently appear within edge images **320.** These edges do not consistently appear in the same locations in the different images because the background moves in edge images **320** because the background is not fixed relative to the camera. Contact edges for the wire contact can be detected in edge images **320** as belonging to the wire contact because the wire contact remains stationary relative to camera.

The result of this process for determining the median of edge images is contact edge image **330.** This contact edge image is an example of contact edge image **246** in **Figure 2** and contains median edge pixels **334** for contact edges for the contact.

In this example, wire contact can be determined from edge images **320** using various algorithms. For example, the segmentation algorithm can be used to identify a region in contact edge image **330** that defines the wire contact. This region can also be referred to as a segment for the wire contact. A portion of the original images from sequence of images **300** or fourth image **316,** which include median edge pixels **334** in contact edge image **330** are applied as an input to the segmentation algorithm. The segmentation algorithm can be, for example, the Grabcut algorithm.

In this example, the portion of fourth image **316** that intersects the median edge pixels **334** in contact edge image **330** is taken as input to the Grabcut algorithm, along with bounding box **331** defining the search region containing median edge pixels **334** for the contact for the algorithm. Bounding box **331** is selected to encompass median edge pixels **334** for contact edges for the contact in edge image to form bounded contact edge image **333.**

As depicted, the result of performing segmentation on bounded contact edge image **333** is contact region image **332.** This contact region image white pixels in a region for wire contact segment **335.** This wire contact segment defines the wire contact. The black pixels in the other region form the background.

With the identification of wire contact segment **335,** the pose for the wire contact can be determined. For example, the covariance of the points corresponding to the wire contact segment can be determined. The process can then determine their eigenvectors (x and y in the Cartesian image space). In this example, the eigenvector corresponding to widest distribution of points is the estimated direction of the contact.

In this example, the pose for the wire contact as shown in image **340.** In this example, the pose for wire contact **342** in image **340** is the position of tip **344.** The pose also includes the orientation in the form of direction **346** for wire contact **342.**

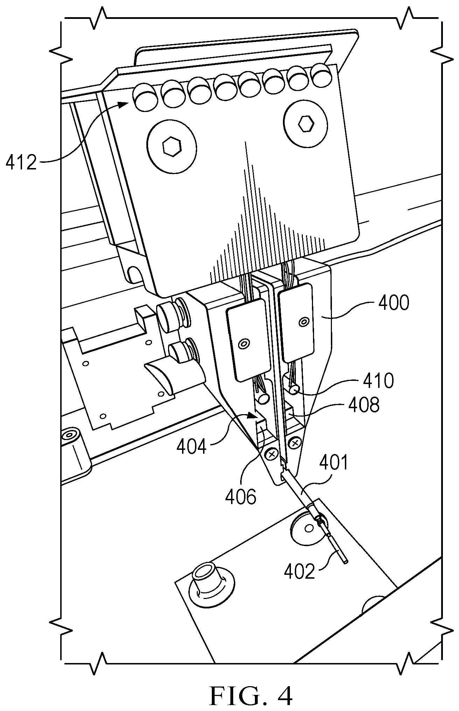

Turning now to **Figure 4****,** an illustration of an end effector for a robotic arm is depicted in accordance with an illustrative embodiment. In this illustrative example, end effector **400** is an example of one implementation for end effector **208** in **Figure 2****.** In this illustrative example, end effector **400** is configured for wire insertion. As depicted, end effector **400** holds wire **401** with wire contact **402.** As depicted, stereographic camera **404** is connected to end effector **400.** Stereographic camera **404** comprises first camera **406** and second camera **408.** In this illustrative example, stereographic camera **404** also includes lighting in the form of light emitting diode (LED) system **410.** Stereographic camera **404** is an example of stereographic camera **239** in **Figure 2****.** Additional lighting is provided by overhead light emitting diode (LED) array **412.**

As depicted in this example, placement of stereographic camera **404,** light emitting diode system **410,** and light emitting diode array **412** can direct light at wire contact **402** and reduce the effects of environmental light when generating images of wire contact **402.** As a result, stereographic camera **404** can generate images that enable detecting wire contacts with more consistency.

With this configuration, first camera **406,** second camera **408,** light emitting diode (LED) system **410,** overhead light emitting diode (LED) array **412,** wire contact **402** are stationary with respect to each other. As result, wire contact **402** does not move within the field of view of first camera **406** and second camera **408** when end effector **400** moves from one location to another location. Further, the lighting provided by light emitting diode (LED) system **410** and overhead light emitting diode (LED) array **412** remains consistent without changing with respect to wire contact **402.**

Thus, the collection of images using this configuration can provide a desired quality to increase the ability to detect wire contact **402.** For example, these images can be used in edge detection, computing the median edges, performing segmentation of the median edges to determine a region for wire contact **402,** and determining the pose of wire contact **402.** In this example, the pose can include a position of the tip or other part of wire contact **402** as well as orientation in the form of a direction for wire contact **402.**

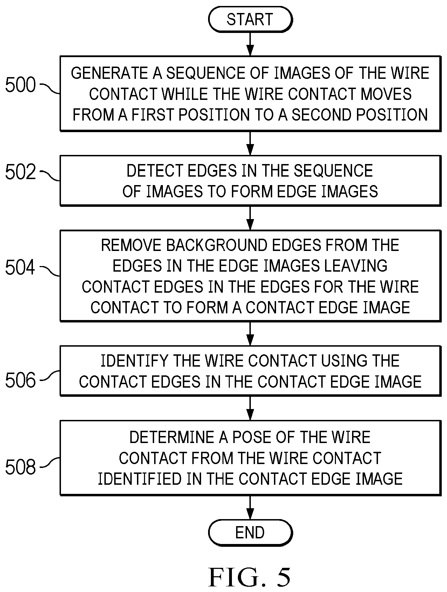

Turning next to **Figure 5****,** an illustration of a flowchart of a process for positioning a wire contact is depicted in accordance with an illustrative embodiment. The process in **Figure 5** can be implemented in hardware, software, or both. When implemented in software, the process can take the form of program instructions that are run by one of more processor units located in one or more hardware devices in one or more computer systems. For example, the process can be implemented in controller **214** in computer system **212** in **Figure 2****.**

The process begins by generating a sequence of images of the wire contact while the wire contact moves from a first position to a second position (operation **500**). In operation **500,** the sequence of images is generated by a camera system connected to an end effector and the wire contact is held by the end effector.

The process detects edges in the sequence of images to form edge images (operation **502**). The process removes background edges from the edges in the edge images leaving contact edges in the edges for the wire contact to form a contact edge image (operation **504**).

The process identifies the wire contact using the contact edges in the contact edge image (operation **506**). The process determines a pose of the wire contact from the wire contact identified in the contact edge image (operation **508**). The process terminates thereafter.

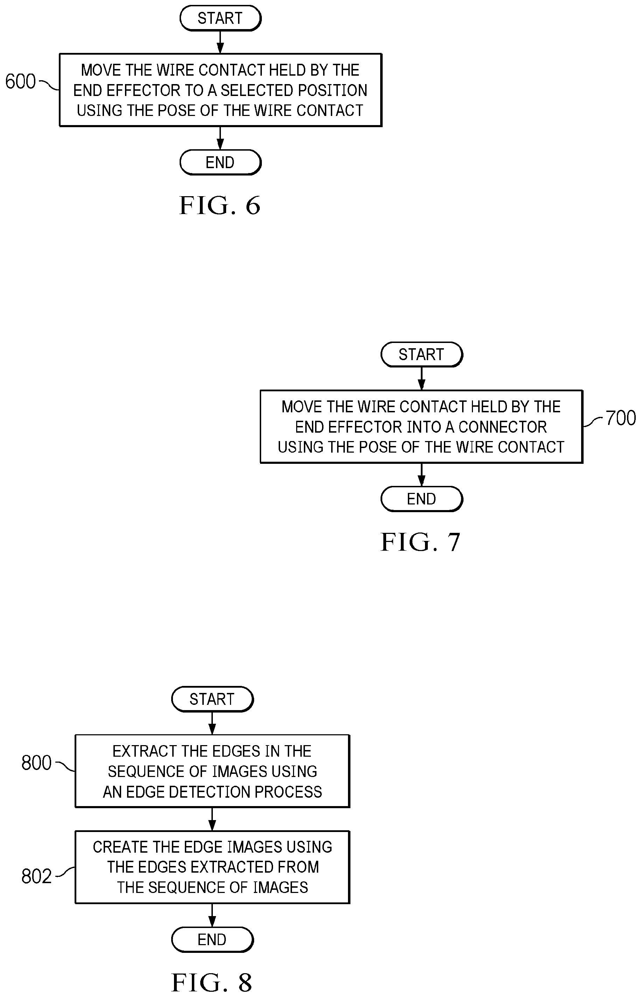

With reference now to **Figure 6****,** an illustration of a flowchart of a process for positioning a wire contact is depicted in accordance with an illustrative embodiment. The operation depicted in this figure is an example of an additional operation that can be performed with the operations in **Figure 5****.**

The process moves the wire contact held by the end effector to a selected position using the pose of the wire contact (operation **600**). The process terminates thereafter.

With reference next to **Figure 7****,** an illustration of a flowchart of a process for positioning a wire contact is depicted in accordance with an illustrative embodiment. The operation depicted in this figure is an example of an additional operation that can be performed with the operations in **Figure 5****.**

The process moves the wire contact held by the end effector into a connector using the pose of the wire contact (operation **700**). The process terminates thereafter.

In **Figure 8****,** an illustration of a flowchart of a process for detecting edges is depicted in accordance with an illustrative embodiment. The process illustrated in **Figure 8** is an example of one implementation for operation **502** in **Figure 5****.**

The process begins by extracting the edges in the sequence of images using an edge detection process {operation **800**). The process creates the edge images using the edges extracted from the sequence of images (operation **802**). The process terminates thereafter.

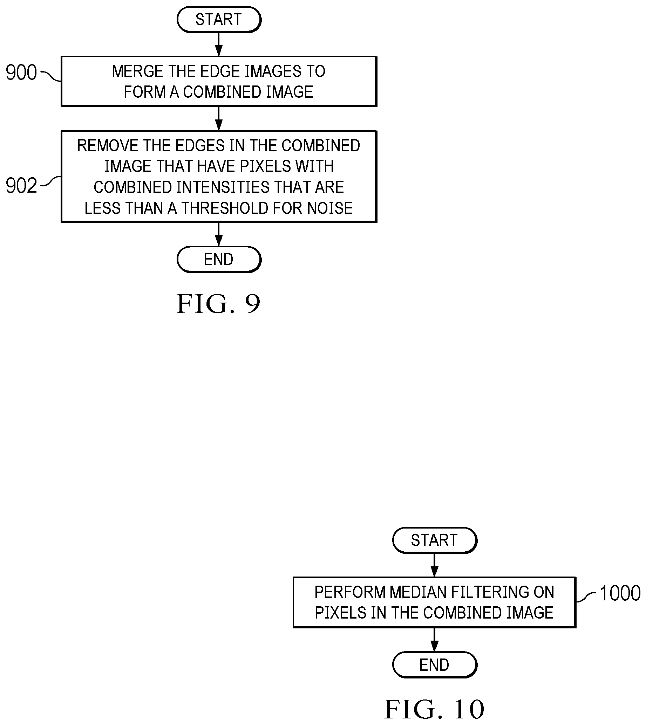

With reference now to **Figure 9****,** an illustration of a flowchart of process for removing background edges is depicted in accordance with an illustrative embodiment. The process in this figure is an example of an implementation for operation **504** in **Figure 5****.**

The process begins by merging the edge images to form a combined image (operation **900**). In operation **900,** intensities of corresponding pixels in the edge images are added to form the combined image having combined intensities.

The process removes the edges in the combined image that have pixels with combined intensities that are less than a threshold for noise (operation **902**). The process terminates thereafter. In operation **902,** the remaining edges are the contact edges for contact edge image.

Turning to **Figure 10****,** an illustration of a flowchart of a process for removing edges is depicted in accordance with an illustrative embodiment. The process illustrated in **Figure 10** is an example of an implementation for operation **902 in** **Figure 9****.**

The process performs median filtering on pixels in the combined image (operation **1000).** The process terminates thereafter. In operation **1000,** the median filtering removes the background edges.

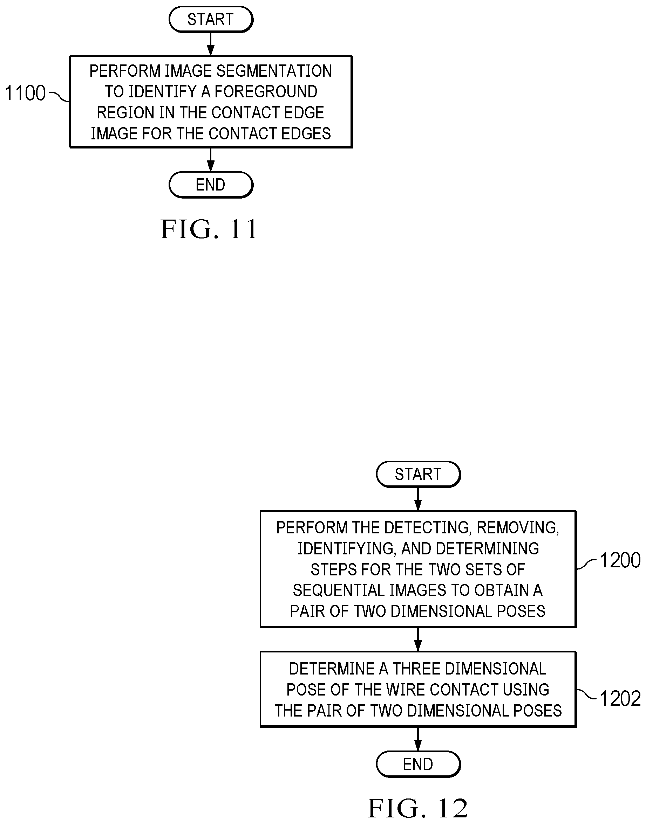

Next in **Figure 11****,** an illustration of a flowchart of a process for identifying a wire contact in a contact edge image is depicted in accordance with an illustrative embodiment. The process illustrated in **Figure 11** is an example of an implementation for operation **506 in** **Figure 5****.**

The process performs image segmentation to identify a foreground region in the contact edge image for the contact edges (operation **1100).** The process terminates thereafter. The use of image segmentation identifies the wire contact that is in the foreground region.

With reference now to **Figure 12****,** an illustration of a flowchart of a process for processing images to determine the pose of a wire contact using a stenographic camera is depicted in accordance with an illustrative embodiment. The process illustrated in this figure is an example of additional steps that can be performed with the process in **Figure 5****.** In this process, the sequence of images comprises two sets of sequential images generated by each of the cameras in the stenographic camera system.

The process performs the detecting, removing, identifying, and determining steps for the two sets of sequential images to obtain a pair of two dimensional poses (operation **1200).** In operation **1200,** these steps are detecting edges in the sequence of images to form edge images; removing background edges from the edges in the edge images leaving contact edges in the edges for the wire contact to form a contact edge image; identifying the wire contact using the contact edges in the contact edge image; and determining a pose of the wire contact from the wire contact identified in the contact edge image.

The process determines a three dimensional pose of the wire contact using the pair of two dimensional poses (operation **1202).** The process terminates thereafter.

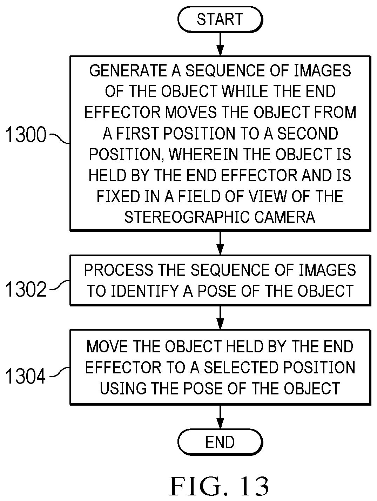

Turning next to **Figure 13****,** an illustration of a flowchart of a process for positioning an object is depicted in accordance with an illustrative embodiment. The process illustrated in **Figure 13** can be implemented in hardware, software, or both. When implemented in software, the process can take the form of program instructions that are run by one of more processor units located in one or more hardware devices in one or more computer systems. For example, the process can be implemented in controller **214** in computer system **212** in **Figure 2****.**

The process begins by generating a sequence of images of the object while the end effector moves the object from a first position to a second position, wherein the object is held by the end effector and is fixed in a field of view of the stereographic camera (operation **1300).** In operation **1300,** the sequence of images is generated by stenographic camera connected to an end effector.

The process processes the sequence of images to identify a pose of the object (operation **1302).** The process moves the object held by the end effector to a selected position using the pose of the object (operation **1304).** The process terminates thereafter.

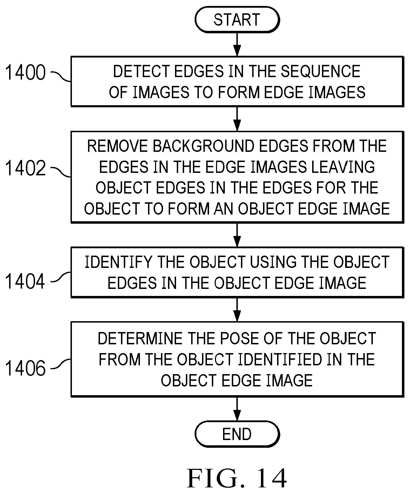

With reference to **Figure 14****,** an illustration of a flowchart of a process for processing a sequence of images is depicted in accordance with an illustrative embodiment. The process illustrated in **Figure 14** is an example of an implementation for operation **1302** in **Figure 13****.**

The process begins by detecting edges in the sequence of images to form edge images (operation **1400**). The process removes background edges from the edges in the edge images leaving object edges in the edges for the object to form an object edge image (operation **1402**).

The process identifies the object using the object edges in the object edge image (operation **1404**). The process determines the pose of the object from the object identified in the object edge image (operation **1406**). The process terminates thereafter.

The flowcharts and block diagrams in the different depicted embodiments illustrate the architecture, functionality, and operation of some possible implementations of apparatuses and methods in an illustrative embodiment. In this regard, each block in the flowcharts or block diagrams can represent at least one of a module, a segment, a function, or a portion of an operation or step. For example, one or more of the blocks can be implemented as program instructions, hardware, or a combination of the program instructions and hardware. When implemented in hardware, the hardware can, for example, take the form of integrated circuits that are manufactured or configured to perform one or more operations in the flowcharts or block diagrams. When implemented as a combination of program instructions and hardware, the implementation may take the form of firmware. Each block in the flowcharts or the block diagrams can be implemented using special purpose hardware systems that perform the different operations or combinations of special purpose hardware and program instructions run by the special purpose hardware.

In some alternative implementations of an illustrative embodiment, the function or functions noted in the blocks may occur out of the order noted in the figures. For example, in some cases, two blocks shown in succession may be performed substantially concurrently, or the blocks may sometimes be performed in the reverse order, depending upon the functionality involved. Also, other blocks may be added in addition to the illustrated blocks in a flowchart or block diagram.

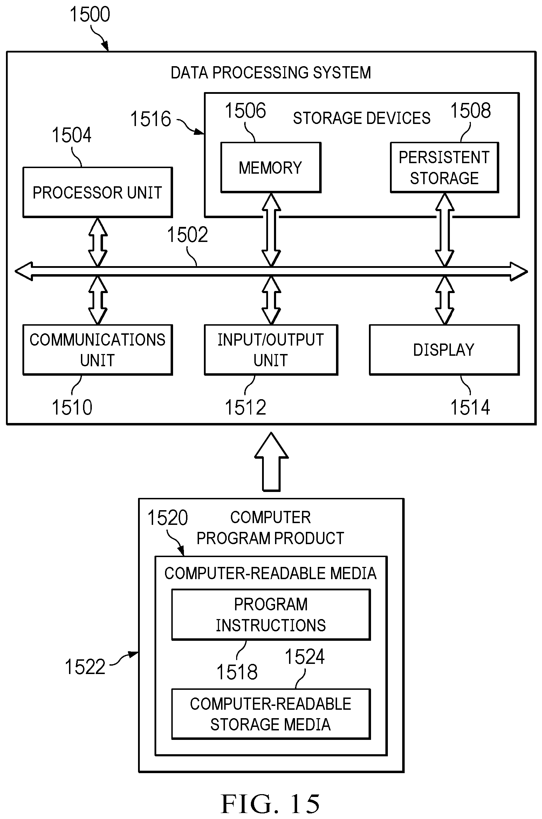

Turning now to **Figure 15****,** a block diagram of a data processing system is depicted in accordance with an illustrative embodiment. Data processing system **1500** can be used to implement server computer **104,** server computer **106,** and client devices **110** in **Figure 1****.** Data processing system **1500** can also be used to implement computer system **212** in **Figure 2****.** In this illustrative example, data processing system **1500** includes communications framework **1502,** which provides communications between processor unit **1504,** memory **1506,** persistent storage **1508,** communications unit **1510,** input/output (I/O) unit **1512,** and display **1514.** In this example, communications framework **1502** takes the form of a bus system.

Processor unit **1504** serves to execute instructions for software that can be loaded into memory **1506.** Processor unit **1504** includes one or more processors. For example, processor unit **1504** can be selected from at least one of a multicore processor, a central processing unit (CPU), a graphics processing unit (GPU), a physics processing unit (PPU), a digital signal processor (DSP), a network processor, or some other suitable type of processor. Further, processor unit **1504** can may be implemented using one or more heterogeneous processor systems in which a main processor is present with secondary processors on a single chip. As another illustrative example, processor unit **1504** can be a symmetric multi-processor system containing multiple processors of the same type on a single chip.

Memory **1506** and persistent storage **1508** are examples of storage devices **1516.** A storage device is any piece of hardware that is capable of storing information, such as, for example, without limitation, at least one of data, program instructions in functional form, or other suitable information either on a temporary basis, a permanent basis, or both on a temporary basis and a permanent basis. Storage devices **1516** may also be referred to as computer-readable storage devices in these illustrative examples. Memory **1506,** in these examples, can be, for example, a random-access memory or any other suitable volatile or non-volatile storage device. Persistent storage **1508** may take various forms, depending on the particular implementation.

For example, persistent storage **1508** may contain one or more components or devices. For example, persistent storage **1508** can be a hard drive, a solid-state drive (SSD), a flash memory, a rewritable optical disk, a rewritable magnetic tape, or some combination of the above. The media used by persistent storage **1508** also can be removable. For example, a removable hard drive can be used for persistent storage **1508.**

Communications unit **1510,** in these illustrative examples, provides for communications with other data processing systems or devices. In these illustrative examples, communications unit **1510** is a network interface card.

Input/output unit **1512** allows for input and output of data with other devices that can be connected to data processing system **1500.** For example, input/output unit **1512** may provide a connection for user input through at least one of a keyboard, a mouse, or some other suitable input device. Further, input/output unit **1512** may send output to a printer. Display **1514** provides a mechanism to display information to a user.

Instructions for at least one of the operating system, applications, or programs can be located in storage devices **1516,** which are in communication with processor unit **1504** through communications framework **1502.** The processes of the different embodiments can be performed by processor unit **1504** using computer-implemented instructions, which may be located in a memory, such as memory **1506.**

These instructions are referred to as program instructions, computer usable program instructions, or computer-readable program instructions that can be read and executed by a processor in processor unit **1504.** The program instructions in the different embodiments can be embodied on different physical or computer-readable storage media, such as memory **1506** or persistent storage **1508.**

Program instructions **1518** is located in a functional form on computer-readable media **1520** that is selectively removable and can be loaded onto or transferred to data processing system **1500** for execution by processor unit **1504.** Program instructions **1518** and computer-readable media **1520** form computer program product **1522** in these illustrative examples. In the illustrative example, computer-readable media **1520** is computer readable storage media **1524.**

Computer readable storage media **1524** is a physical or tangible storage device used to store program instructions **1518** rather than a medium that propagates or transmits program instructions **1518.** Computer readable storage media **1524** may be at least one of an electronic storage medium, a magnetic storage medium, an optical storage medium, an electromagnetic storage medium, a semiconductor storage medium, a mechanical storage medium, or other physical storage medium. Some known types of storage devices that include these mediums include: a diskette, a hard disk, a random access memory (RAM), a read-only memory (ROM), an erasable programmable read-only memory (EPROM or Flash memory), a static random access memory (SRAM), a compact disc read-only memory (CD-ROM), a digital versatile disk (DVD), a memory stick, a floppy disk, a mechanically encoded device,such as punch cards or pits / lands formed in a major surface of a disc, or any suitable combination thereof.

Computer readable storage media **1524,** as that term is used in the present disclosure, is not to be construed as storage in the form of transitory signals per se, such as at least one of radio waves or other freely propagating electromagnetic waves, electromagnetic waves propagating through a waveguide, light pulses passing through a fiber optic cable, electrical signals communicated through a wire, or other transmission media.

Further, data can be moved at some occasional points in time during normal operations of a storage device. These normal operations include access, de-fragmentation or garbage collection. However, these operations do not render the storage device as transitory because the data is not transitory while the data is stored in the storage device.

Alternatively, program instructions **1518** can be transferred to data processing system **1500** using a computer-readable signal media. The computer-readable signal media are signals and can be, for example, a propagated data signal containing program instructions **1518.** For example, the computer-readable signal media can be at least one of an electromagnetic signal, an optical signal, or any other suitable type of signal. These signals can be transmitted over connections, such as wireless connections, optical fiber cable, coaxial cable, a wire, or any other suitable type of connection.

Further, as used herein, "computer-readable media **1520"** can be singular or plural. For example, program instructions **1518** can be located in computer-readable media **1520** in the form of a single storage device or system. In another example, program instructions **1518** can be located in computer-readable media **1520** that is distributed in multiple data processing systems. In other words, some instructions in program instructions **1518** can be located in one data processing system while other instructions in program instructions **1518** can be located in one data processing system. For example, a portion of program instructions **1518** can be located in computer-readable media **1520** in a server computer while another portion of program instructions **1518** can be located in computer-readable media **1520** located in a set of client computers.

The different components illustrated for data processing system **1500** are not meant to provide architectural limitations to the manner in which different embodiments can be implemented. In some illustrative examples, one or more of the components may be incorporated in or otherwise form a portion of, another component. For example, memory **1506,** or portions thereof, may be incorporated in processor unit **1504** in some illustrative examples. The different illustrative embodiments can be implemented in a data processing system including components in addition to or in place of those illustrated for data processing system **1500.** Other components shown in **Figure 15** can be varied from the illustrative examples shown. The different embodiments can be implemented using any hardware device or system capable of running program instructions **1518.**

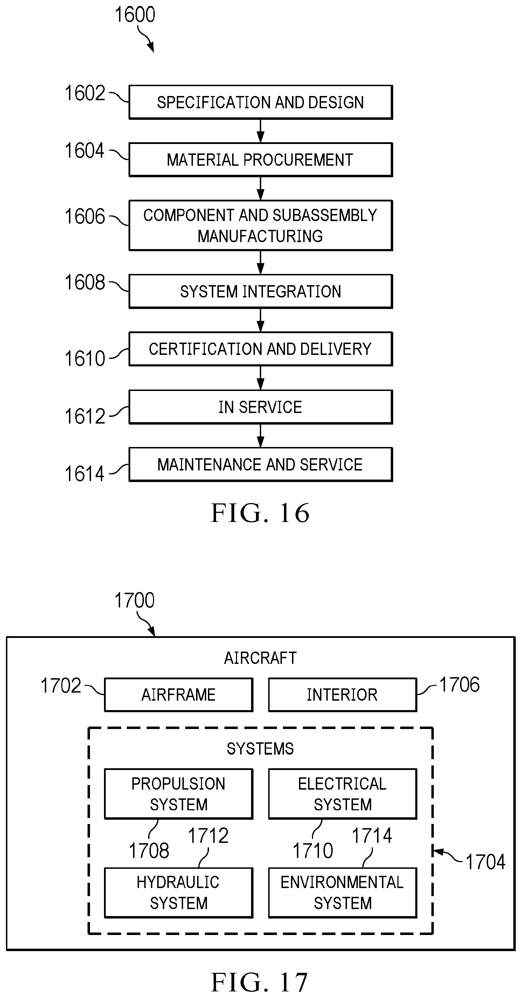

Illustrative embodiments of the disclosure may be described in the context of aircraft manufacturing and service method **1600** as shown in **Figure 16** and aircraft **1700** as shown in **Figure** 17. Turning first to **Figure 16****,** an illustration of an aircraft manufacturing and service method is depicted in accordance with an illustrative embodiment. During pre-production, aircraft manufacturing and service method **1600** may include specification and design **1602** of aircraft **1700** in **Figure 17** and material procurement **1604.**

During production, component and subassembly manufacturing **1606** and system integration **1608** of aircraft **1700** in **Figure 17** takes place. Thereafter, aircraft **1700** in **Figure 17** can go through certification and delivery **1610** in order to be placed in service **1612.** While in service **1612** by a customer, aircraft **1700** in **Figure 17** is scheduled for routine maintenance and service **1614,** which may include modification, reconfiguration, refurbishment, and other maintenance or service.

Each of the processes of aircraft manufacturing and service method **1600** may be performed or carried out by a system integrator, a third party, an operator, or some combination thereof. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

With reference now to **Figure 17****,** an illustration of an aircraft is depicted in which an illustrative embodiment may be implemented. In this example, aircraft **1700** is produced by aircraft manufacturing and service method **1600** in **Figure 16** and may include airframe **1702** with plurality of systems **1704** and interior **1706.** Examples of systems **1704** include one or more of propulsion system **1708,** electrical system **1710,** hydraulic system **1712,** and environmental system **1714.** Any number of other systems may be included. Although an aerospace example is shown, different illustrative embodiments may be applied to other industries, such as the automotive industry.

Apparatuses and methods embodied herein may be employed during at least one of the stages of aircraft manufacturing and service method **1600** in **Figure 16****.**

In one illustrative example, components or subassemblies produced in component and subassembly manufacturing **1606** in **Figure 16** can be fabricated or manufactured in a manner similar to components or subassemblies produced while aircraft **1700** is in service **1612** in **Figure 16****.** As yet another example, one or more apparatus embodiments, method embodiments, or a combination thereof can be utilized during production stages, such as component and subassembly manufacturing **1606** and system integration **1608** in **Figure 16****.** One or more apparatus embodiments, method embodiments, or a combination thereof may be utilized while aircraft **1700** is in service **1612,** during maintenance and service **1614** in **Figure 16****,** or both. The use of a number of the different illustrative embodiments may substantially expedite the assembly of aircraft **1700,** reduce the cost of aircraft **1700,** or both expedite the assembly of aircraft **1700** and reduce the cost of aircraft **1700.**

For example, robotic system **202** can be used during component and subassembly manufacturing **1606** to assemble wire bundles for wiring harnesses used in aircraft **1700.** As another example, robotic system **202** can also be used to assemble wire bundles for components used in maintenance and service **1614.** Also, robotic system **202** can be used to manipulate other objects in addition to or in place of inserting wire contacts for wires into connectors.

Thus, the illustrative examples provide a method, apparatus, system, and computer program product for positions a wire contact. A sequence of images of a wire contact is generated while the wire contact moves from a first position to a second position. The sequence of images is generated by the camera system connected to the end effector and the wire contact is held by the end effector. Edges are detected in the sequence of images to form edge images. Background edges are removed from the edges in the edge images leaving contact edges in the edges for the wire contact to form a contact edge image. The wire contact is identified using the contact edges in the contact edge image. A pose of the wire contact is determined from the wire contact identified in the contact edge image.

In an illustrative example, the camera system is connected to the end effector forming the wire contact or other object. As result, the wire contact does not move during the generation of images by the camera system even when the end effector moves the wire contact from one position to another position. As result, the image processing can remove background features leaving the wire contact without using complex modeling systems such as machine learning models. The wire contact in the image can be used to determine the pose of the image. That pose can then be used to move the image to different positions in performing various to operations using the wire contact.

The description of the different illustrative embodiments has been presented for purposes of illustration and description and is not intended to be exhaustive or limited to the embodiments in the form disclosed. The different illustrative examples describe components that perform actions or operations. In an illustrative embodiment, a component can be configured to perform the action or operation described. For example, the component can have a configuration or design for a structure that provides the component an ability to perform the action or operation that is described in the illustrative examples as being performed by the component. Further, to the extent that terms "includes", "including", "has", "contains", and variants thereof are used herein, such terms are intended to be inclusive in a manner similar to the term "comprises" as an open transition word without precluding any additional or other elements.

Many modifications and variations will be apparent to those of ordinary skill in the art. Further, different illustrative embodiments may provide different features as compared to other desirable embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

## Claims

1. A robotic system (202) comprising:
an end effector (136, 208, 400);
a camera system (209) connected to the end effector (136, 208, 400); and
a controller (214), wherein the controller (214) is configured to:
generate a sequence of images (232, 300) of a wire contact (138, 224, 342, 400) while the wire contact (138, 224, 342, 400) moves from a first position (236) to a second position (238), wherein the sequence of images (232, 300) is generated by the camera system (209) connected to the end effector (136, 208, 400) and the wire contact (138, 224, 342, 400) is held by the end effector (136, 208, 400);
detect edges (240) in the sequence of images (232, 300) to form edge images (142, 241, 320);
remove background edges (242) from the edges (240) in the edge images (142, 241, 320) leaving contact edges (244) in the edges (240) for the wire contact (138, 224, 342, 400) to form a contact edge image (246, 330) comprising:
merge the edge images (142, 241, 320) to form a combined image (250), wherein intensities of corresponding pixels in the edge images (142, 241, 320) are added to form the combined image (250) having pixels (251) with combined intensities (252); and
remove the edges (240) in the combined image (250) that have pixels (251) with the combined intensities (252) that are less than a threshold for noise, wherein remaining edges are the contact edges (244) for contact edge image (246, 330), comprising perform median filtering (253) on pixels (251) in the combined image (250);
identify the wire contact (138, 224, 342, 400) using the contact edges (244) in the contact edge image (246, 330); and
determine a pose (150, 226) of the wire contact (138, 224, 342, 400) from the wire contact (138, 224, 342, 400) identified in the contact edge image (246, 330).

2. The robotic system (202) of claim 1, wherein the controller (214) is configured to:
move the wire contact (138, 224, 342, 400) held by the end effector (136, 208, 400) to a selected position (247) using the pose (150, 226) of the wire contact (138, 224, 342, 400).

3. The robotic system (202) of claim 1 or 2, wherein the controller (214) is configured to:
move the wire contact (138, 224, 342, 400) held by the end effector (136, 208, 400) into a connector (248) using the pose (150, 226) of the wire contact (138, 224, 342, 400).

4. The robotic system (202) of any of the preceding claims, wherein in detecting the edges (240) in the sequence of images (232, 300), the controller (214) is configured to:
extract the edges (240) in the sequence of images (232, 300) using an edge detection process; and
create the edge images (142, 241, 320) using the edges (240) extracted from the sequence of images (232, 300).

5. The robotic system (202) of any of the preceding claims, wherein in identifying the wire contact (138, 224, 342, 400) using the contact edges (244) in the contact edge image (246, 330), the controller (214) is configured to:
perform image segmentation (255) to identify a foreground region in the contact edge image (246, 330) for the contact edges (244).

6. The robotic system (202) of any of the preceding claims, wherein the camera system (209) is a stereographic camera (239) and wherein the sequence of images (232, 300) comprises two sets of sequential images (260) generated by each of the cameras in the stereographic camera (239) and wherein the controller (214) is configured to:
perform detecting the edges (240) in the sequence of images (232, 300) to form the edge images (142, 241, 320); removing the background edges (242) from the edges (240) in the edge images (142, 241, 320) leaving the contact edges (244) in the edges (240) for the wire contact (138, 224, 342, 400) to form the contact edge image (246, 330); identifying the wire contact (138, 224, 342, 400) using the contact edges (244) in the contact edge image (246, 330); and determining a pose (150, 226) of the wire contact (138, 224, 342, 400) from the wire contact (138, 224, 342, 400) identified in the contact edge image (246, 330) for the two sets of sequential images (260) to obtain a pair of two dimensional poses; and
determine a three dimensional pose (150, 226) of the wire contact (138, 224, 342, 400) using the pair of two dimensional poses.

7. The robotic system (202) of any of the preceding claims, wherein the end effector (136, 208, 400) is connected to a platform selected from a group comprising a robotic arm, a crawler, and an unmanned aerial vehicle.

8. The robotic system (202) of any of the preceding claims, wherein the camera system (209) is a stereographic camera (239).

9. A method for positioning a wire contact (138, 224, 342, 400), the method comprising:
generating (500), by a computer system (212), a sequence of images (232, 300) of the wire contact (138, 224, 342, 400) while the wire contact (138, 224, 342, 400) moves from a first position (236) to a second position (238), wherein the sequence of images (232, 300) is generated by a camera system (209) connected to an end effector (136, 208, 400) and the wire contact (138, 224, 342, 400) is held by the end effector (136, 208, 400);
detecting (502), by the computer system (212), edges (240) in the sequence of images (232, 300) to form edge images (142, 241, 320);
removing (504), by the computer system (212), background edges (242) from the edges (240) in the edge images (142, 241, 320) leaving contact edges (244) in the edges (240) for the wire contact (138, 224, 342, 400) to form a contact edge image (246, 330), comprising:
merging, by the computer system (212), the edge images (142, 241, 320) to form a combined image (250), wherein intensities of corresponding pixels in the edge images (142, 241, 320) are added to form the combined image (250) having pixels (251) with combined intensities (252); and
removing, by the computer system (212), the edges (240) in the combined image (250) that have pixels (251) with the combined intensities (252) that are less than a threshold for noise, wherein remaining edges are the contact edges (244) for contact edge image (246, 330), comprising performing, by the computer system (212), median filtering (253) on pixels (251) in the combined image (250);
identifying (506), by the computer system (212), the wire contact (138, 224, 342, 400) using the contact edges (244) in the contact edge image (246, 330); and
determining (508), by the computer system (212), a pose (150, 226) of the wire contact (138, 224, 342, 400) from the wire contact (138, 224, 342, 400) identified in the contact edge image (246, 330).

10. The method of claim 9 further comprising:
moving (600), by the computer system (212), the wire contact (138, 224, 342, 400) held by the end effector (136, 208, 400) to a selected position (247) using the pose (150, 226) of the wire contact (138, 224, 342, 400).

11. The method of claim 9 or 10 further comprising:
moving (700), by the computer system (212), the wire contact (138, 224, 342, 400) held by the end effector (136, 208, 400) into a connector (248) using the pose (150, 226) of the wire contact (138, 224, 342, 400).

12. The method of claim 9, 10 or 11, wherein detecting (502), by the computer system (212), the edges (240) in the sequence of images (232, 300) comprises:
extracting (800), by the computer system (212), the edges (240) in the sequence of images (232, 300) using an edge detection process; and
creating (802), by the computer system (212), the edge images (142, 241, 320) using the edges (240) extracted from the sequence of images (232, 300).

13. The method of any of claims 9 to 12, wherein identifying, by the computer system, the wire contact using the contact edges in the contact edge image comprises:
performing, by the computer system, image segmentation to identify a foreground region in the contact edge image for the contact edges.

14. The method of any of claims 9 to 13, wherein the camera system is a stereographic camera and wherein the sequence of images comprises two sets of sequential images generated by each of the cameras in the stereographic camera and further comprising:
performing, by the computer system, the detecting, removing, identifying, and detecting steps for the two sets of sequential images to obtain a pair of two dimensional poses; and
determining, by the computer system, a three dimensional pose of the wire contact using the pair of two dimensional poses.

15. A computer program product for positioning a wire contact (138, 224, 342, 400), the computer program product comprising a computer readable storage medium having program instructions embodied therewith, the program instructions executable by a computer system (212) to cause the computer system (212) to perform the method of any of claims 9 to 14.

## Patentansprüche

1. Robotersystem (202), umfassend:
einen Endeffektor (136, 208, 400);
ein Kamerasystem (209), das mit dem Endeffektor (136, 208, 400) verbunden ist; und
eine Steuereinrichtung (214), wobei die Steuereinrichtung (214) ausgebildet ist zum:
Erzeugen einer Bildsequenz (232, 300) eines Drahtkontakts (138, 224, 342, 400), während sich der Drahtkontakt (138, 224, 342, 400) von einer ersten Position (236) zu einer zweiten Position (238) bewegt, wobei die Bildsequenz (232, 300) von dem mit dem Endeffektor (136, 208, 400) verbundenen Kamerasystem (209) erzeugt wird und der Drahtkontakt (138, 224, 342, 400) von dem Endeffektor (136, 208, 400) gehalten wird; Detektieren von Kanten (240) in der Bildsequenz (232, 300) zur Bildung von Kantenbildern (142, 241, 320);
Entfernen von Hintergrundkanten (242) aus den Kanten (240) in den Kantenbildern (142, 241, 320), wobei Kontaktkanten (244) in den Kanten (240) für den Drahtkontakt (138, 224, 342, 400) verbleiben, um ein Kontaktkantenbild (246, 330) zu bilden, umfassend:
Zusammenführen der Kantenbilder (142, 241, 320) zur Bildung eines kombinierten Bilds (250), wobei Intensitäten entsprechender Pixel in den Kantenbildern (142, 241, 320) addiert werden, um das kombinierte Bild (250) mit Pixeln (251) mit kombinierten Intensitäten (252) zu bilden; und
Entfernen der Kanten (240) in dem kombinierten Bild (250), die Pixel (251) mit den kombinierten Intensitäten (252) aufweisen, die unter einem Schwellenwert für Rauschen liegen, wobei die verbleibenden Kanten die Kontaktkanten (244) für das Kontaktkantenbild (246, 330) sind, umfassend Durchführen einer Medianfilterung (253) an Pixeln (251) in dem kombinierten Bild (250);
Identifizieren des Drahtkontakts (138, 224, 342, 400) anhand der Kontaktkanten (244) in dem Kontaktkantenbild (246, 330); und
Bestimmen einer Pose (150, 226) des Drahtkontakts (138, 224, 342, 400) aus dem in dem Kontaktkantenbild (246, 330) identifizierten Drahtkontakt (138, 224, 342, 400).

2. Robotersystem (202) nach Anspruch 1, wobei die Steuereinrichtung (214) ausgebildet ist zum:
Bewegen des von dem Endeffektor (136, 208, 400) gehaltenen Drahtkontakts (138, 224, 342, 400) zu einer ausgewählten Position (247) unter Verwendung der Pose (150, 226) des Drahtkontakts (138, 224, 342, 400).

3. Robotersystem (202) nach Anspruch 1 oder 2, wobei die Steuereinrichtung (214) ausgebildet ist zum:
Einführen des von dem Endeffektor (136, 208, 400) gehaltenen Drahtkontakts (138, 224, 342, 400) in einen Steckverbinder (248) unter Verwendung der Pose (150, 226) des Drahtkontakts (138, 224, 342, 400).

4. Robotersystem (202) nach einem der vorhergehenden Ansprüche, wobei die Steuereinrichtung (214) beim Detektieren der Kanten (240) in der Bildsequenz (232, 300) ausgebildet ist zum:
Extrahieren der Kanten (240) in der Bildsequenz (232, 300) mittels eines Kantendetektionsverfahrens; und
Erstellen der Kantenbilder (142, 241, 320) anhand der aus der Bildsequenz (232, 300) extrahierten Kanten (240).

5. Robotersystem (202) nach einem der vorhergehenden Ansprüche, wobei die Steuereinrichtung (214) beim Identifizieren des Drahtkontakts (138, 224, 342, 400) anhand der Kontaktkanten (244) in dem Kontaktkantenbild (246, 330) ausgebildet ist zum:
Durchführen einer Bildsegmentierung (255) zur Identifizierung eines Vordergrundbereichs in dem Kontaktkantenbild (246, 330) für die Kontaktkanten (244).

6. Robotersystem (202) nach einem der vorhergehenden Ansprüche, wobei das Kamerasystem (209) eine stereoskopische Kamera (239) ist und wobei die Bildsequenz (232, 300) zwei Sätze sequenzieller Bilder (260) umfasst, die jeweils von den Kameras der stereoskopischen Kamera (239) erzeugt werden, und wobei die Steuereinrichtung (214) ausgebildet ist zum:
Durchführen des Detektierens der Kanten (240) in der Bildsequenz (232, 300) zur Bildung der Kantenbilder (142, 241, 320); Entfernen der Hintergrundkanten (242) aus den Kanten (240) in den Kantenbildern (142, 241, 320), wobei die Kontaktkanten (244) in den Kanten (240) für den Drahtkontakt (138, 224, 342, 400) verbleiben, um das Kontaktkantenbild (246, 330) zu bilden; Identifizieren des Drahtkontakts (138, 224, 342, 400) anhand der Kontaktkanten (244) in dem Kontaktkantenbild (246, 330); und Bestimmen einer Pose (150, 226) des Drahtkontakts (138, 224, 342, 400) aus dem in dem Kontaktkantenbild (246, 330) identifizierten Drahtkontakt (138, 224, 342, 400) für die zwei Sätze sequenzieller Bilder (260), um ein Paar zweidimensionaler Posen zu erhalten; und
Bestimmen einer dreidimensionalen Pose (150, 226) des Drahtkontakts (138, 224, 342, 400) unter Verwendung des Paars zweidimensionaler Posen.

7. Robotersystem (202) nach einem der vorhergehenden Ansprüche, wobei der Endeffektor (136, 208, 400) mit einer Plattform verbunden ist, die aus einer Gruppe ausgewählt ist, die einen Roboterarm, einen Crawler und ein unbemanntes Luftfahrzeug umfasst.

8. Robotersystem (202) nach einem der vorhergehenden Ansprüche, wobei das Kamerasystem (209) eine stereoskopische Kamera (239) ist.

9. Verfahren zum Positionieren eines Drahtkontakts (138, 224, 342, 400), wobei das Verfahren umfasst:
Erzeugen (500), durch ein Computersystem (212), einer Bildsequenz (232, 300) des Drahtkontakts (138, 224, 342, 400), während sich der Drahtkontakt (138, 224, 342, 400) von einer ersten Position (236) zu einer zweiten Position (238) bewegt, wobei die Bildsequenz (232, 300) von einem mit einem Endeffektor (136, 208, 400) verbundenen Kamerasystem (209) erzeugt wird und der Drahtkontakt (138, 224, 342, 400) von dem Endeffektor (136, 208, 400) gehalten wird;
Detektieren (502), durch das Computersystem (212), von Kanten (240) in der Bildsequenz (232, 300) zur Bildung von Kantenbildern (142, 241, 320);
Entfernen (504), durch das Computersystem (212), von Hintergrundkanten (242) aus den Kanten (240) in den Kantenbildern (142, 241, 320), wobei Kontaktkanten (244) in den Kanten (240) für den Drahtkontakt (138, 224, 342, 400) verbleiben, um ein Kontaktkantenbild (246, 330) zu bilden, umfassend:
Zusammenführen, durch das Computersystem (212), der Kantenbilder (142, 241, 320) zur Bildung eines kombinierten Bilds (250), wobei Intensitäten entsprechender Pixel in den Kantenbildern (142, 241, 320) addiert werden, um das kombinierte Bild (250) mit Pixeln (251) mit kombinierten Intensitäten (252) zu bilden; und
Entfernen, durch das Computersystem (212), der Kanten (240) in dem kombinierten Bild (250), die Pixel (251) mit den kombinierten Intensitäten (252) aufweisen, die unter einem Schwellenwert für Rauschen liegen, wobei die verbleibenden Kanten die Kontaktkanten (244) für das Kontaktkantenbild (246, 330) sind, umfassend Durchführen, durch das Computersystem (212), einer Medianfilterung (253) an Pixeln (251) in dem kombinierten Bild (250);
Identifizieren (506), durch das Computersystem (212), des Drahtkontakts (138, 224, 342, 400) anhand der Kontaktkanten (244) in dem Kontaktkantenbild (246, 330); und Bestimmen (508), durch das Computersystem (212), einer Pose (150, 226) des Drahtkontakts (138, 224, 342, 400) aus dem in dem Kontaktkantenbild (246, 330) identifizierten Drahtkontakt (138, 224, 342, 400).

10. Verfahren nach Anspruch 9, ferner umfassend:
Bewegen (600), durch das Computersystem (212), des von dem Endeffektor (136, 208, 400) gehaltenen Drahtkontakts (138, 224, 342, 400) zu einer ausgewählten Position (247) unter Verwendung der Pose (150, 226) des Drahtkontakts (138, 224, 342, 400).

11. Verfahren nach Anspruch 9 oder 10, ferner umfassend:
Einführen (700), durch das Computersystem (212), des von dem Endeffektor (136, 208, 400) gehaltenen Drahtkontakts (138, 224, 342, 400) in einen Steckverbinder (248) unter Verwendung der Pose (150, 226) des Drahtkontakts (138, 224, 342, 400).

12. Verfahren nach Anspruch 9, 10 oder 11, wobei das Detektieren (502), durch das Computersystem (212), der Kanten (240) in der Bildsequenz (232, 300) umfasst:
Extrahieren (800), durch das Computersystem (212), der Kanten (240) in der Bildsequenz (232, 300) mittels eines Kantendetektionsverfahrens; und
Erstellen (802), durch das Computersystem (212), der Kantenbilder (142, 241, 320) anhand der aus der Bildsequenz (232, 300) extrahierten Kanten (240).

13. Verfahren nach einem der Ansprüche 9 bis 12, wobei das Identifizieren, durch das Computersystem, des Drahtkontakts anhand der Kontaktkanten in dem Kontaktkantenbild umfasst:
Durchführen, durch das Computersystem, einer Bildsegmentierung zur Identifizierung eines Vordergrundbereichs in dem Kontaktkantenbild für die Kontaktkanten.

14. Verfahren nach einem der Ansprüche 9 bis 13, wobei das Kamerasystem eine stereoskopische Kamera ist und wobei die Bildsequenz zwei Sätze sequenzieller Bilder umfasst, die jeweils von den Kameras der stereoskopischen Kamera erzeugt werden, ferner umfassend:
Durchführen, durch das Computersystem, der Schritte des Detektierens, Entfernens, Identifizierens und Bestimmens für die zwei Sätze sequenzieller Bilder, um ein Paar zweidimensionaler Posen zu erhalten; und
Detektieren, durch das Computersystem, einer dreidimensionalen Pose des Drahtkontakts unter Verwendung des Paars zweidimensionaler Posen.

15. Computerprogrammprodukt zum Positionieren eines Drahtkontakts (138, 224, 342, 400), wobei das Computerprogrammprodukt ein computerlesbares Speichermedium umfasst, auf dem Programminstruktionen verkörpert sind, wobei die Programminstruktionen durch ein Computersystem (212) ausführbar sind, um das Computersystem (212) zu veranlassen, das Verfahren nach einem der Ansprüche 9 bis 14 durchzuführen.

## Revendications

1. Système robotique (202) comprenant :
un effecteur (136, 208, 400) ;
un système de caméra (209) connecté à l'effecteur (136, 208, 400) ; et
un dispositif de commande (214), dans lequel le dispositif de commande (214) est configuré pour :
générer une séquence d'images (232, 300) d'un contact de fil (138, 224, 342, 400) pendant que le contact de fil (138, 224, 342, 400) se déplace d'une première position (236) à une seconde position (238), dans lequel la séquence d'images (232, 300) est générée par le système de caméra (209) connecté à l'effecteur (136, 208, 400) et le contact de fil (138, 224, 342, 400) est maintenu par l'effecteur (136, 208, 400) ;
détecter des contours (240) dans la séquence d'images (232, 300) pour former des images de contour (142, 241, 320) ;
supprimer des contours d'arrière-plan (242) des contours (240) dans les images de contour (142, 241, 320) en laissant des contours de contact (244) dans les contours (240) pour le contact de fil (138, 224, 342, 400) afin de former une image de contour de contact (246, 330) comprenant :
la fusion des images de contour (142, 241, 320) pour former une image combinée (250), dans lequel des intensités de pixels correspondants dans les images de contour (142, 241, 320) sont ajoutées pour former l'image combinée (250) ayant des pixels (251) avec des intensités combinées (252) ; et
supprimer les contours (240) dans l'image combinée (250) qui ont des pixels (251) avec les intensités combinées (252) qui sont inférieures à un seuil de bruit, dans lequel des contours restants sont les contours de contact (244) pour l'image de contour de contact (246, 330), comprenant la réalisation d'un filtrage médian (253) sur des pixels (251) dans l'image combinée (250) ;
identifier le contact de fil (138, 224, 342, 400) à l'aide des contours de contact (244) dans l'image de contour de contact (246, 330) ; et
déterminer une pose (150, 226) du contact de fil (138, 224, 342, 400) à partir du contact de fil (138, 224, 342, 400) identifié dans l'image de contour de contact (246, 330).

2. Système robotique (202) selon la revendication 1, dans lequel le dispositif de commande (214) est configuré pour :
déplacer le contact de fil (138, 224, 342, 400) maintenu par l'effecteur (136, 208, 400) vers une position choisie (247) à l'aide de la pose (150, 226) du contact de fil (138, 224, 342, 400).

3. Système robotique (202) selon la revendication 1 ou 2, dans lequel le dispositif de commande (214) est configuré pour :
déplacer le contact de fil (138, 224, 342, 400) maintenu par l'effecteur (136, 208, 400) dans un connecteur (248) à l'aide de la pose (150, 226) du contact de fil (138, 224, 342, 400).

4. Système robotique (202) selon l'une quelconque des revendications précédentes, dans lequel, lors de la détection des contours (240) dans la séquence d'images (232, 300), le dispositif de commande (214) est configuré pour :
extraire les contours (240) dans la séquence d'images (232, 300) à l'aide d'un processus de détection de contour ; et
créer les images de contour (142, 241, 320) à l'aide des contours (240) extraits de la séquence d'images (232, 300).

5. Système robotique (202) selon l'une quelconque des revendications précédentes, dans lequel, lors de l'identification du contact de fil (138, 224, 342, 400) à l'aide des contours de contact (244) dans l'image de contour de contact (246, 330), le dispositif de commande (214) est configuré pour :
réaliser une segmentation d'image (255) pour identifier une région de premier plan dans l'image de contour de contact (246, 330) pour les contours de contact (244).

6. Système robotique (202) selon l'une quelconque des revendications précédentes, dans lequel le système de caméra (209) est une caméra stéréographique (239) et dans lequel la séquence d'images (232, 300) comprend deux ensembles d'images séquentielles (260) générées par chacune des caméras dans la caméra stéréographique (239) et dans lequel le dispositif de commande (214) est configuré pour :
réaliser la détection des contours (240) dans la séquence d'images (232, 300) pour former les images de contour (142, 241, 320) ; supprimer les contours d'arrière-plan (242) des contours (240) dans les images de contour (142, 241, 320) en laissant les contours de contact (244) dans les contours (240) pour le contact de fil (138, 224, 342, 400) afin de former l'image de contour de contact (246, 330) ; identifier le contact de fil (138, 224, 342, 400) à l'aide des contours de contact (244) dans l'image de contour de contact (246, 330) ; et déterminer une pose (150, 226) du contact de fil (138, 224, 342, 400) à partir du contact de fil (138, 224, 342, 400) identifié dans l'image de contour de contact (246, 330) pour les deux ensembles d'images séquentielles (260) afin d'obtenir une paire de poses bidimensionnelles ; et
déterminer une pose tridimensionnelle (150, 226) du contact de fil (138, 224, 342, 400) à l'aide de la paire de poses bidimensionnelles.

7. Système robotique (202) selon l'une quelconque des revendications précédentes, dans lequel l'effecteur (136, 208, 400) est connecté à une plateforme choisie dans un groupe comprenant un bras robotique, une chenille et un véhicule aérien sans pilote.

8. Système robotique (202) selon l'une quelconque des revendications précédentes, dans lequel le système de caméra (209) est une caméra stéréographique (239).

9. Procédé permettant de positionner un contact de fil (138, 224, 342, 400), le procédé comprenant :
la génération (500), par un système informatique (212), d'une séquence d'images (232, 300) du contact de fil (138, 224, 342, 400) pendant que le contact de fil (138, 224, 342, 400) se déplace d'une première position (236) à une seconde position (238), dans lequel la séquence d'images (232, 300) est générée par un système de caméra (209) connecté à un effecteur (136, 208, 400) et le contact de fil (138, 224, 342, 400) est maintenu par l'effecteur (136, 208, 400) ;
la détection (502), par le système informatique (212), de contours (240) dans la séquence d'images (232, 300) pour former des images de contour (142, 241, 320) ;
la suppression (504), par le système informatique (212), des contours d'arrière-plan (242) des contours (240) dans les images de contour (142, 241, 320) laissant des contours de contact (244) dans les contours (240) pour le contact de fil (138, 224, 342, 400) afin de former une image de contour de contact (246, 330), comprenant :
la fusion, par le système informatique (212), des images de contour (142, 241, 320) pour former une image combinée (250), dans lequel des intensités de pixels correspondants dans les images de contour (142, 241, 320) sont ajoutées pour former l'image combinée (250) ayant des pixels (251) avec des intensités combinées (252) ; et
la suppression, par le système informatique (212), des contours (240) dans l'image combinée (250) qui ont des pixels (251) avec les intensités combinées (252) qui sont inférieurs à un seuil de bruit, dans lequel des contours restants sont les contours de contact (244) pour l'image de contour de contact (246, 330), comprenant la réalisation, par le système informatique (212), d'un filtrage médian (253) sur des pixels (251) dans l'image combinée (250) ;
l'identification (506), par le système informatique (212), du contact de fil (138, 224, 342, 400) à l'aide des contours de contact (244) dans l'image de contour de contact (246, 330) ; et
la détermination (508), par le système informatique (212), d'une pose (150, 226) du contact de fil (138, 224, 342, 400) à partir du contact de fil (138, 224, 342, 400) identifiée dans l'image de contour de contact (246, 330).

10. Procédé selon la revendication 9, comprenant en outre :
le déplacement (600), par le système informatique (212), du contact de fil (138, 224, 342, 400) maintenu par l'effecteur (136, 208, 400) vers une position choisie (247) à l'aide de la pose (150, 226) du contact de fil (138, 224, 342, 400).

11. Procédé selon la revendication 9 ou 10, comprenant en outre :
le déplacement (700), par le système informatique (212), du contact de fil (138, 224, 342, 400) maintenu par l'effecteur (136, 208, 400) dans un connecteur (248) à l'aide de la pose (150, 226) du contact de fil (138, 224, 342, 400).

12. Procédé selon la revendication 9, 10 ou 11, dans lequel la détection (502), par le système informatique (212), des contours (240) dans la séquence d'images (232, 300) comprend :
l'extraction (800), par le système informatique (212), des contours (240) dans la séquence d'images (232, 300) à l'aide d'un processus de détection de contour ; et
la création (802), par le système informatique (212), des images de contour (142, 241, 320) à l'aide des contours (240) extraits de la séquence d'images (232, 300).

13. Procédé selon l'une quelconque des revendications 9 à 12, dans lequel l'identification, par le système informatique, du contact de fil à l'aide des contours de contact dans l'image de contour de contact comprend :
la réalisation, par le système informatique, d'une segmentation d'image pour identifier une région de premier plan dans l'image de contour de contact pour les contours de contact.

14. Procédé selon l'une quelconque des revendications 9 à 13, dans lequel le système de caméra est une caméra stéréographique et dans lequel la séquence d'images comprend deux ensembles d'images séquentielles générées par chacune des caméras dans la caméra stéréographique et comprenant en outre : la réalisation, par le système informatique, des étapes de détection, de suppression, d'identification et de détection pour les deux ensembles d'images séquentielles afin d'obtenir une paire de poses bidimensionnelles ; et
la détermination, par le système informatique, d'une pose tridimensionnelle du contact de fil à l'aide de la paire de poses bidimensionnelles.

15. Produit-programme d'ordinateur permettant de positionner un contact de fil (138, 224, 342, 400), le produit-programme d'ordinateur comprenant un support de stockage lisible par ordinateur dans lequel sont incorporées des instructions de programme, les instructions de programme pouvant être exécutées par un système informatique (212) afin d'amener le système informatique (212) à réaliser le procédé selon l'une quelconque des revendications 9 à 14.
